# EUROPÄISCHE PATENTSCHRIFT

(11) **EP 3 807 126 B1**
(45) Veröffentlichungstag und Bekanntmachung des Hinweises auf die Patenterteilung: **30.11.2022**
(21) Anmeldenummer: 19731675.5
(22) Anmeldetag: 13.06.2019
(51) Int. Cl.: B60N 2/70, B60N 2/68, B60N 2/90, B60N 2/803

(54) **SITZTEIL, INSBESONDERE RÜCKENLEHNE FÜR EINEN FAHRZEUGSITZ**
SEAT PART, ESPECIALLY BACKREST FOR A VEHICLE SEAT
ELEMENT DE SIEGE, EN PARTICULIER DOSSIER POUR SIEGE DE VEHICULE

(30) Priorität: 13.06.2018 DE 102018209427
(43) Veröffentlichungstag der Anmeldung: 21.04.2021
(73) Patentinhaber: Adient US LLC, Plymouth, MI 48170 (US)
(72) Erfinder: REICHEL, Uwe, 67655 Kaiserslautern (DE); FISCHER, Georg Ludwig, 67722 Winnweiler (DE)
(74) Vertreter: Liedhegener, Ralf
(86) Internationale Anmeldenummer: PCT/EP2019/065554
(87) Internationale Veröffentlichungsnummer: WO 2019/238852

(56) Entgegenhaltungen:
- DE-A1-102015 113 507
- US-A1- 2005 275 273
- US-A1- 2015 061 338
- US-A1- 2018 056 836

## Beschreibung

Die Erfindung betrifft ein Sitzteil, insbesondere eine Rückenlehne für einen Fahrzeugsitz.

Aus dem Stand der Technik sind Sitzteile, wie Rückenlehnen für Fahrzeugsitze, allgemein bekannt.

Aus der US 2018/056836 A1 ist ein Sitzteil bekannt, umfassend eine Tragstruktur, welche einen Rohrrahmen und ein als eine Rückenplatte ausgebildetes Bauteil umfasst, wobei der Rohrrahmen eine Öffnung aufweist, in welcher eine Gewindehülse angeordnet ist. Das Bauteil ist an der Vorderseite des Rohrrahmens angeordnet und mittels einer in die Gewindehülse eingeschraubten Schraube am Rohrrahmen befestigt.

Die DE 10 2015 113 507 A1 offenbart ein Verfahren zum Herstellen eines mehrteiligen Faser-Kunststoff-Verbundbauteils für eine Tragstruktur eines Kraftfahrzeugs, wobei ein Kunststoffhohlprofil mit einem flächigen Kunststoffteil und mit einer Kunststoffverstärkungsstruktur stoffschlüssig und/oder formschlüssig und/oder kraftschlüssig verbunden wird.

Aufgabe der vorliegenden Erfindung ist es, ein gegenüber dem Stand der Technik verbessertes Sitzteil für einen Fahrzeugsitz anzugeben, welches bei verbesserter Kontur hinreichend lasttragend ausgebildet ist.

Die Aufgabe wird erfindungsgemäß mit einem Sitzteil für einen Fahrzeugsitz mit den Merkmalen des Anspruchs 1 gelöst.

Vorteilhafte Ausgestaltungen der Erfindung sind Gegenstand der Unteransprüche.

Ein erfindungsgemäßes Sitzteil, insbesondere eine Rückenlehne für einen Fahrzeugsitz, auch als Sitzlehne oder Sitzlehnenteil bezeichnet, umfasst eine Tragstruktur, gebildet zumindest aus einem Rohrrahmen und einem Verbundbauteil, auch als Compositebauteil bezeichnet, wobei der Rohrrahmen an einer Vorderseite mindestens eine Öffnung aufweist, in welcher eine Gewindehülse, auch als Gewindebuchse bezeichnet, angeordnet ist, und wobei das Verbundbauteil an der Vorderseite des Rohrrahmens angeordnet und mittels einer in die Gewindehülse eingeschraubten Schraube am Rohrrahmen befestigt ist, wobei die Gewindehülse ein Bestandteil eines Adaptionselements ist, welches an der Vorderseite des Rohrrahmens befestigt ist.

Das Sitzteil kann insbesondere eine Rückenlehne oder eine Sitzfläche des Sitzes sein.

In einer Ausführungsform bilden das Verbundbauteil und der Rohrrahmen ein Konturelement des Sitzteils. Insbesondere bildet das Konturelement eine Sitzkontur für einen Sitzbenutzer. Mit anderen Worten: Sowohl das Verbundbauteil als auch der Rahmen sind jeweils derart geformt und miteinander gefügt, dass diese eine Sitzkontur für einen Sitzbenutzer bilden. Bei einer Rückenlehne weist das Konturelement beispielsweise einen mittleren Rückenbereich und zwei gegenüber dem Rückenbereich geneigte Seitenwangenbereiche auf. Bei einer Sitzfläche weist das Konturelement beispielsweise einen mittleren Sitzflächenbereich und zwei gegenüber dem Sitzflächenbereich geneigte Seitenwangenbereiche auf.

Bei einer Rückenlehne mit integrierter Kopfstütze weist das Konturelement insbesondere einen mittleren Rückenbereich, der über einen Nackenbereich mit einem Kopfbereich verbunden ist, und zwei gegenüber dem Rückenbereich geneigte Seitenwangenbereiche auf.

In einer weiteren Ausführungsform ist das Verbundbauteil schalenförmig ausgebildet und weist beispielsweise vorder- und rückseitig Vertiefungen auf, welche mit einer Versteifungs-, insbesondere Rippen- und/oder Wabenstruktur, versehen sind. Im Randbereich der Schale kann das Verbundbauteil kanalförmige Vertiefungen aufweisen, die mit einer Versteifungs-, insbesondere Rippen- und/oder Wabenstruktur, versehen sind. Im mittleren Bereich der Schale kann das Verbundbauteil flächenförmige Vertiefungen aufweisen, die mit einer Rippenstruktur versehen sind. Die Versteifungsstrukturen sind derart in die vorder- und/oder rückseitig eingeformten Vertiefungen, insbesondere im Spritzgussverfahren, eingebracht, dass die Versteifungsstrukturen bündig mit der Schale abschließen und somit eine Oberflächenebene oder -kontur des Sitzteils bilden.

Darüber hinaus kann das Verbundbauteil in einem unteren Schalenbereich einen u-förmigen Ausschnitt oder einen u-förmigen Kanal aufweisen, in welcher der Rohrrahmen korrespondierend geformt angeordnet ist. Der u-förmige Kanal ist insbesondere integral in das Verbundbauteil in dessen unteren Schalenbereich eingeformt. Dabei wird der Rohrrahmen in den Ausschnitt oder den Kanal derart eingefügt, dass dieser bündig mit dem Schalenbereich abschließt, so dass der Rohrrahmen und die Schale eine Oberflächenebene oder -kontur des Sitzteils bilden.

Die Vorderseite des Sitzteils ist insbesondere eine Auflagefläche der Rückenlehne oder der Sitzfläche und somit einem Insassen, wenn dieser im Fahrzeugsitz sitzt, zugewandt. Vorteilhafterweise weist der Rohrrahmen an der Vorderseite mehrere solcher Öffnungen auf, in welchen jeweils eine Gewindehülse angeordnet ist, so dass das an der Vorderseite des Rohrrahmens angeordnete Verbundbauteil mittels in die jeweilige Gewindehülse eingeschraubter Schrauben am Rohrrahmen befestigt ist. Anstelle einer Schraube kann auch eine andere Verbindungstechnik, zum Beispiel Niettechnik, zur Anwendung kommen.

Ein weiterer Aspekt sieht vor, dass zwischen dem Rohrrahmen und dem Verbundbauteil ein flexibles Adaptionselement mit einer mit der Öffnung übereinstimmend angeordneten Ausnehmung für die Schraube oder Niete vorgesehen ist, wobei die Schraube bzw. Niete das Adaptionselement durchdringt und das Adaptionselement im zusammengesetzten, insbesondere geschraubten oder genieteten, Zustand von Rohrrahmen und Verbundbauteil zwischen diesen verspannt, insbesondere definiert verspannt.

Beispielsweise ist das Adaptionselement formschlüssig auf dem Rohrrahmen aufsetzbar oder an diesem in Richtung des Verbundbauteils in Art eines Distanzelements anordenbar, wobei das Verbundbauteil wiederum auf dem Adaptionselement anordenbar ist und somit das Adaptionselement zwischen dem Rohrrahmen und dem Verbundbauteil angeordnet ist. Das Adaptionselement wird dabei mittels eines Arretierungsmittels, wie einer Schraube oder einer Niete, welches den Rohrrahmen und das Verbundbauteil miteinander verbinden, zwischen diesem Rohrrahmen und dem Verbundbauteil einstellbar verspannt.

Mittels des flexiblen und mittels der Schraube oder Niete einstellbar verspannten Adaptionselements zwischen Rohrrahmen und Verbundbauteil kann die Auflage des Körpers eines Sitznutzers oder Insassen des Fahrzeugsitzes auf der Rückenlehne mit einer weitgehend gleichmäßigen Beabstandung zum Verbundbauteil ermöglicht werden. D. h. der Körper weist vorteilhafterweise an allen Stellen einen gleichen Abstand zum Verbundbauteil bzw. Rohrrahmen auf, wobei zwischen Insasse und Verbundbauteil bzw. Rohrrahmen bei dem fertiggestellten Fahrzeugsitz insbesondere eine Polsterung angeordnet ist. Durch diese Einstellung von Verbundbauteil und Rohrrahmen mittels des/der Adaptionselements/e können Druckstellen am Körper des Insassen reduziert oder gar vermieden werden.

Sowohl der Rohrrahmen als auch das Verbundbauteil sind lasttragend, d. h. sie nehmen durch einen Insassen auf sie einwirkende Lasten auf. Durch die Verbindung von Rohrrahmen und Verbundbauteil ist eine lasttragende Gesamtstruktur ausgebildet, wobei das Verbundbauteil durch den Rohrrahmen, welcher eine hohe Steifigkeit und Festigkeit aufweist, in dynamischen Lastfällen entlastet wird.

Die erfindungsgemäße Lösung ermöglicht eine Verbindungstechnik von Rohrrahmen und Verbundbauteil, welche eine Tragstruktur für ein Sitzteil, zum Beispiel eine Rückenlehne oder eine Sitzfläche bilden, wobei die Verbindungstechnik derart ausgebildet ist, dass Verbindungselemente, insbesondere die Schraube und die Gewindehülse oder die mehreren Schrauben und Gewindehülsen, bei einer Ansicht von hinten auf die lasttragende Struktur, d. h. auf eine Rückseite der Rückenlehne, nicht sichtbar sind, denn die jeweilige Öffnung ist an der Vorderseite des Rohrrahmens angeordnet, so dass die Öffnung und die darin angeordnete Gewindehülse vom rückseitig verschlossenen Rohrrahmen verdeckt ist. Auch die jeweilige Schraube wird von vorn durch das Verbundbauteil hindurch in die Öffnung im Rohrrahmen eingeführt und in die Gewindehülse eingeschraubt, d. h. von vorn nach hinten verschraubt, so dass auch die jeweilige Schraube von hinten nicht sichtbar ist, da sie insbesondere durch das Verbundbauteil und zudem durch den Rohrrahmen vollständig verdeckt ist. Dadurch wird eine gute optische Anmutung der lasttragenden Verbindungstechnik von Verbundbauteil zu Rohrrahmen erzielt.

Die Verbindungstechnik zwischen Rohrrahmen und Verbundbauteil umfasst mehrere Schraub-Hülsen-Verbindungen, wobei die Adaptionselemente, welche zwischen dem Rohrrahmen und dem Verbundbauteil angeordnet sind, voneinander verschieden sein können. Beispielsweise können die verschiedenen Adaptionselemente sich in Form, Größe, Material und/oder Abmessungen unterscheiden. Hierdurch können beispielsweise positionsbedingt unterschiedliche Höhen ausgeglichen werden. Beispielsweise können je nach Grad der Beanspruchung des jeweiligen Lehnenbereichs in Bereichen mit einer stärkeren Beanspruchung Adaptionselemente aus einem festeren Material und in weniger beanspruchten Lehnenbereichen Adaptionselemente mit flexibleren Materialeigenschaften eingesetzt werden.

In einer möglichen Ausführungsform ist das jeweilige Adaptionselement als ein Spannelement ausgebildet. Beispielsweise umfasst das Adaptionselement eine Hülse mit einem Spannkragen, Spannarmen, Spannflügel und/oder anderen geeigneten elastischen Elementen. Alternativ kann das Adaptionselement als eine Scheibe oder ein Teller mit elastischen Bereichen ausgebildet sein. Die Hülse oder Scheibe oder der Teller ist dabei tragend zwischen dem Rohrrahmen und dem Verbundbauteil, insbesondere im Bereich einer Verprägung, angeordnet, wobei die elastischen Elemente, wie Spannkragen, Spannarme, Spannflügel, zusätzlich auf dem Rohrrahmen festlegbar sind, insbesondere einstellbar abgestützt sind.

In einer nicht erfindungsgemäßen Ausführungsform ist die Gewindehülse oder, bei mehreren Gewindehülsen, die jeweilige Gewindehülse, in den Rohrrahmen eingeschweißt. Dies ist eine einfach zu realisierende Möglichkeit der Anordnung der Gewindehülse oder der mehreren Gewindehülsen im Rohrrahmen und erfordert insbesondere keinen zusätzlichen Bauraum. Die Realisierung dieser Ausführungsform ist jedoch abhängig von einer möglichen Belastung auf die jeweilige Gewindehülse und damit auf die Verbindung zum Rohrrahmen und zudem von einer Rohrwandstärke des Rohrrahmens.

Insbesondere wenn diese Ausführungsform aufgrund der genannten Kriterien, insbesondere Belastung und Rohrwandstärke, nicht realisierbar ist, kann eine erfindungsgemäße Ausführungsform verwendet werden. In dieser erfindungsgemäßen Ausführungsform ist die Gewindehülse ein Bestandteil eines Adaptionselementes, auch als Adaptionsblech bezeichnet, welches an der Vorderseite des Rohrrahmens befestigt ist. Die Befestigung des Adaptionselementes am Rohrrahmen kann dabei derart erfolgen, dass die Gewindehülse in die Öffnung im Rohrrahmen eintaucht oder dass bei mehreren Gewindehülsen die jeweilige Gewindehülse in die jeweilige für sie vorgesehene Öffnung im Rohrrahmen eintaucht.

Um das Einbringen der Öffnung oder der mehreren Öffnungen in den Rohrrahmen zu erleichtern und/oder die Befestigung des Adaptionselementes und/oder des Verbundbauteils am Rohrrahmen zu erleichtern, weist der Rohrrahmen an seiner Vorderseite im Bereich der Öffnung oder der mehreren Öffnungen beispielsweise eine Verprägung auf. D. h. die Öffnung oder die mehreren Öffnungen sind in der Grundfläche der Verprägung angeordnet. In einer möglichen Ausführungsform ist das Adaptionselement im Bereich der Verprägung angeordnet, insbesondere auf der Grundfläche der Verprägung oder im Bereich der Grundfläche, beispielsweise über der Grundfläche, d. h. von dieser abgehoben und somit von der Vorderseite des Rohrrahmens im Bereich der Verprägung beabstandet, so dass nur Randbereiche des Adaptionselementes am Rohrrahmen seitlich der Verprägung anliegen. Dadurch wird beispielsweise eine Befestigung des Adaptionselementes am Rohrrahmen erleichtert.

Beispielsweise ist/sind das Adaptionselement und/oder der Rohrrahmen aus Metall ausgebildet. Insbesondere wenn sowohl das Adaptionselement als auch der Rohrrahmen aus Metall ausgebildet ist, ermöglicht dies eine einfache und stabile Verbindung des Adaptionselementes mit dem Rohrrahmen. Beispielsweise ist das Adaptionselement mit dem Rohrrahmen verschweißt.

Das Verbundbauteil ist beispielsweise aus einem, insbesondere umgeformten, Organoblech ausgebildet. Ein solches Organoblech, auch als Organosheet bezeichnet, ist ein Faserverbundbauteil, wobei das noch nicht geformte Organoblech insbesondere ein Faser-Matrix-Halbzeug ist, umfassend zumindest ein Fasergewebe oder Fasergelege, das in einen Kunststoff, insbesondere einen Polymerwerkstoff oder thermoplastischen Kunststoff, zum Beispiel in eine Polymermatrix oder thermoplastische Kunststoffmatrix, eingebettet ist. Dies erfolgt beispielsweise durch ein Spritzgussverfahren. Beispielsweise ist die Polymermatrix oder die thermoplastische Kunststoffmatrix zumindest aus Polypropylen oder Polyamid gebildet, welche mittels Spritzgussverfahren auf das Organoblech aufgebracht wird. Das Fasergewebe oder Fasergelege ist aus einem natürlichen oder synthetischen Material, insbesondere werden Carbon- oder Glasfasern verwendet, gebildet. Das Organoblech ist darüber hinaus warmumformbar, indem es, beispielsweise durch Infrarotlichtbestahlung, erwärmt wird und dann umgeformt wird, beispielsweise durch Einlegen in eine entsprechende Form. Ein solches Verbundbauteil weist insbesondere ein geringes Gewicht und eine hohe Stabilität auf.

An das Organoblech kann darüber hinaus eine Spritzgussmasse, zum Beispiel eine Kunststoffmasse, insbesondere Polypropylen oder Polyamid, angespritzt sein. Durch die Spritzgussmasse sind beispielsweise Versteifungsstrukturen, insbesondere in Form von Rippenstrukturen und/oder Wabenstrukturen, und/oder Aufnahmen für am Fahrzeugsitz zu befestigende Anbauteile ausgebildet. Die Versteifungsstrukturen aus Kunststoff und die Polymermatrix des Organoblechs können in einem Spritzgussvorgang an das Fasergewebe oder Fasergelege angeformt werden.

Die Ausbildung des Verbundbauteils erfolgt beispielsweise durch Erwärmen des Organoblechs und Einlegen in ein Spritzgusswerkzeug, wodurch das Organoblech in eine vorgegebene Form entsprechend der Ausformung mindestens eines Formteils des Spritzgusswerkzeugs gebracht wird. Des Weiteren wird in diesem Spritzgusswerkzeug die Spritzgussmasse, insbesondere ein Kunststoff, insbesondere ein thermoplastischer Kunststoff, an das Organoblech zur Ausbildung von Versteifungsstrukturen angespritzt.

Ein Fahrzeugsitz umfasst ein solches Sitzteil, insbesondere eine solche Rückenlehne oder Sitzfläche. Dadurch werden auch für den Fahrzeugsitz die oben geschilderten Vorteile erzielt.

Ein Fahrzeug umfasst mindestens einen solchen Fahrzeugsitz, wodurch auch für das Fahrzeug die oben geschilderten Vorteile erzielt werden.

In einem Verfahren zur Herstellung des Sitzteils, wie beispielsweise der Rückenlehne, wird in den Rohrrahmen an dessen Vorderseite mindestens eine Öffnung oder es werden mehrere solcher Öffnungen eingebracht, in welcher oder in welchen jeweils eine Gewindehülse angeordnet wird, und das Verbundbauteil wird an der Vorderseite des Rohrrahmens angeordnet und mittels einer in die Gewindehülse eingeschraubten Schraube oder mittels mehreren in die jeweilige Gewindehülse eingeschraubten Schrauben am Rohrrahmen befestigt.

Wie bereits oben erwähnt, besteht die Möglichkeit, dass die Gewindehülse in den Rohrrahmen eingeschweißt wird oder die mehreren Gewindehülsen in den Rohrrahmen eingeschweißt werden, wobei dies insbesondere abhängig von Belastung und Rohrwandstärke des Rohrrahmens ist. Alternativ wird das Adaptionselement mit integrierter Gewindehülse oder mehreren integrierten Gewindehülsen verwendet, welches an der Vorderseite des Rohrrahmens derart befestigt wird, dass die Gewindehülse in die Öffnung des Rohrrahmens eintaucht oder die mehreren Gewindehülsen jeweils in eine Öffnung des Rohrrahmens eintauchen.

Um das Einbringen der Öffnung oder der mehreren Öffnungen und das Anbringen des Verbundbauteils und, wenn dieses verwendet wird, auch des Adaptionselementes zu erleichtern, wird an der Vorderseite des Rohrrahmens im Bereich der Öffnung oder der mehreren Öffnungen oder der vorgesehenen Öffnung oder Öffnungen die Verprägung eingebracht, d. h. es kann/können beispielsweise zunächst die Öffnung oder die mehreren Öffnungen und dann die Verprägung erzeugt werden oder zunächst die Verprägung und dann die Öffnung oder die mehreren Öffnungen. Das Erzeugen erst der Verprägung und dann der Öffnung oder der mehreren Öffnungen hat den Vorteil, dass die jeweilige Öffnung auf der geraden Grundfläche der Verprägung einfacher erzeugt werden kann und sich nicht durch ein nachfolgendes Verprägen verformt. Das Erzeugen der Verprägung erfolgt vor dem Anordnen des Verbundbauteils und dem eventuellen Anordnen des Adaptionselementes.

Vorteilhafterweise wird das Adaptionselement im Bereich der Grundfläche der Verprägung, insbesondere über der Grundfläche, angeordnet. Das Adaptionselement wird beispielsweise mit dem Rohrrahmen verschweißt.

Das Verbundbauteil wird beispielsweise aus dem, insbesondere umgeformten, Organoblech ausgebildet. Das Umformen erfolgt auf die oben beschriebene Weise durch Erwärmen und Umformen, beispielsweise im Spritzgusswerkzeug, in welchem an das Organoblech insbesondere die Spritzgussmasse angespritzt wird.

Das Verbundbauteil ist insbesondere in einem so genannten One Shot Hybrid Molding Process als Organoblech mit Spritzgussmasse in automatisierter Fertigung herstellbar. Dabei erfolgt vorteilhafterweise das Umformen des erwärmten Organoblechs und das Anspritzen der Spritzgussmasse im Spritzgusswerkzeug.

Die beschriebene Lösung bietet insbesondere eine Verbindungstechnik von Organoblech mit Spritzgussmasse und einem insbesondere metallischen Rohrrahmen mit einer guten optischen Anmutung, insbesondere durch die verdeckten und somit nicht sichtbaren Verbindungselemente.

Ausführungsbeispiele der Erfindung werden anhand von Zeichnungen näher erläutert. Dabei zeigen:
- Figur 1A: schematisch einen Fahrzeugsitz,
- Figur 1B: schematisch ein Ausführungsbeispiel für eine Tragstruktur einer Rückenlehne, wobei die Tragstruktur zumindest ein Rohrelement und ein Verbundbauteil umfasst, welche mittels eines zwischen diesen einstellbar verspannten Adaptionselements miteinander verbunden sind,
- Figur 1C: schematisch ein Ausführungsbeispiel einer Tragstruktur für eine Rückenlehne eines Fahrzeugsitzes von vorne,
- Figur 1D: schematisch ein Ausführungsbeispiel einer Tragstruktur für eine Rückenlehne eines Fahrzeugsitzes von hinten,
- Figur 1E: schematisch ein Ausführungsbeispiel einer alternativen Tragstruktur für eine Rückenlehne eines Fahrzeugsitzes von hinten,
- Figur 2: schematisch eine Schnittdarstellung eines Ausschnitts einer Rückenlehne eines Fahrzeugsitzes, und
- Figur 3: schematisch eine Draufsicht auf eine Vorderseite eines Ausschnitts einer Rückenlehne.

Einander entsprechende Teile sind in allen Figuren mit den gleichen Bezugszeichen versehen.

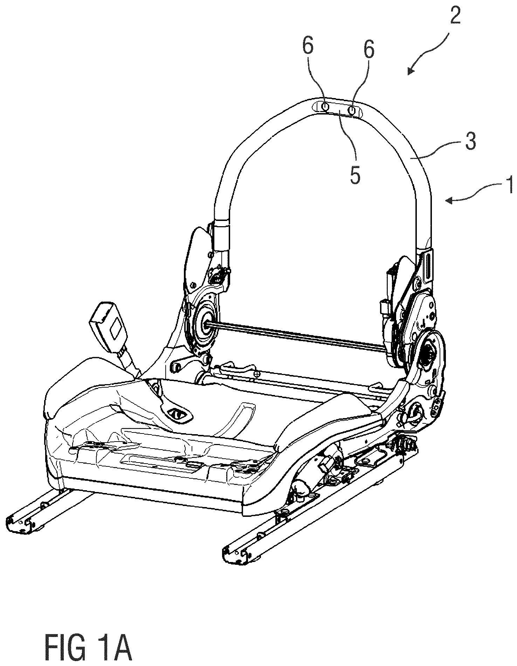

Anhand der Figuren 1A bis 3 wird im Folgenden als Sitzteil S eine Rückenlehne 1 für einen Fahrzeugsitz 2 und deren Herstellung beschrieben. Anstelle einer Rückenlehne 1 ist die Erfindung auch für eine Sitzfläche anwendbar.

Die Rückenlehne 1 umfasst einen, insbesondere metallischen, Rohrrahmen 3 und ein Verbundbauteil 4, auch als Compositebauteil bezeichnet, welches insbesondere eine Lehnenschale der Rückenlehne 1 bildet. Figur 1A zeigt den Fahrzeugsitz 2, wobei hier nur der Rohrrahmen 3 der Rückenlehne 1 dargestellt ist. Das Verbundbauteil 4 ist hier nicht dargestellt.

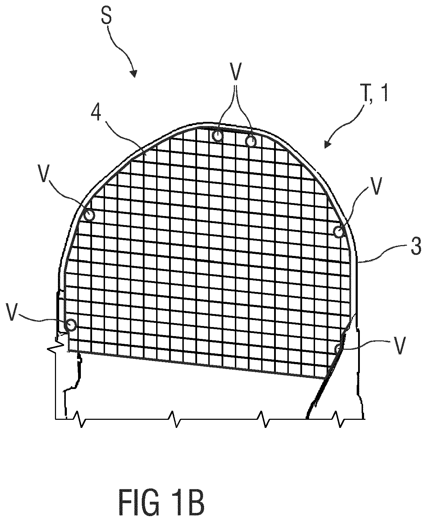

Die Figur 1B zeigt ein Ausführungsbeispiel für eine Tragstruktur T der Rückenlehne 1. Die Tragstruktur T umfasst zumindest den Rohrrahmen 3 und das an diesem befestigte Verbundbauteil 4. Das Verbundbauteil 4 ist an einer Vorderseite des Rohrrahmens 3 angeordnet und mittels mindestens einer oder mehrerer Schraub-Hülse-Verbindungen V mit dem Rohrrahmen 3 verbunden. Die eine oder die jeweilige Schraub-Hülse-Verbindung V umfasst mindestens eine Gewindehülse 8, die in einer Öffnung 6 des Rohrrahmens 3 angeordnet ist. Das Verbundbauteil 4 ist insbesondere mittels einer in die Gewindehülse 8 eingeschraubten Schraube 10 am Rohrrahmen 3 befestigt.

Die eine oder die jeweilige Schraub-Hülse-Verbindung V umfasst darüber hinaus ein Adaptionselement 7, welches zwischen dem Rohrrahmen 3 und dem Verbundbauteil 4 einstellbar verspannt ist.

Insbesondere weist das flexible Adaptionselement 7 eine Ausnehmung 7.1 auf, welche mit der Öffnung 6 im Rohrrahmen 3 übereinstimmend anordenbar ist oder im verbauten Zustand angeordnet ist. Hierdurch kann die Schraube 10 sowohl durch die Ausnehmung 7.1 als auch die Öffnung 6 des Rohrrahmens 3 geführt werden, um dann das Verbundbauteil 4 am Rohrrahmen 3 formschlüssig mit einstellbarer Distanz mittels des Adaptionselements 7 zu befestigen. Dabei wird das Adaptionselement 7 im zusammengebauten Zustand von Rohrrahmen 3 und Verbundbauteil 4 zwischen diesen einstellbar verspannt.

Wie in Figur 1B gezeigt, sind der Rohrrahmen 3 und das Verbundbauteil 4 mittels mehrerer Schraub-Hülsen-Verbindungen V miteinander verbunden. Dabei können die mehreren Adaptionselemente 7 voneinander verschieden sein. Beispielsweise können sich die Adaptionselemente 7 in Form, Größe, Material und/oder Abmessungen voneinander unterscheiden. Zum Beispiel können die Adaptionselemente 7 unterschiedlich hoch ausgebildet sein, um beispielsweise unterschiedliche Höhen oder Tiefen des Rohrrahmens 3 und/oder des Verbundbauteils 4 auszugleichen, damit die in Richtung Insasse weisende Oberflächenseite des Verbundbauteils 4 eine entsprechende Kontur aufweist. Alternativ oder zusätzlich können diese unterschiedlich flexibel ausgebildet sein, um beispielsweise unterschiedliche Belastungsbereiche beispielsweise durch festere Adaptionselemente 7 als weniger stark beanspruchte Belastungsbereiche der Rückenlehne 1 entsprechend zu stützen.

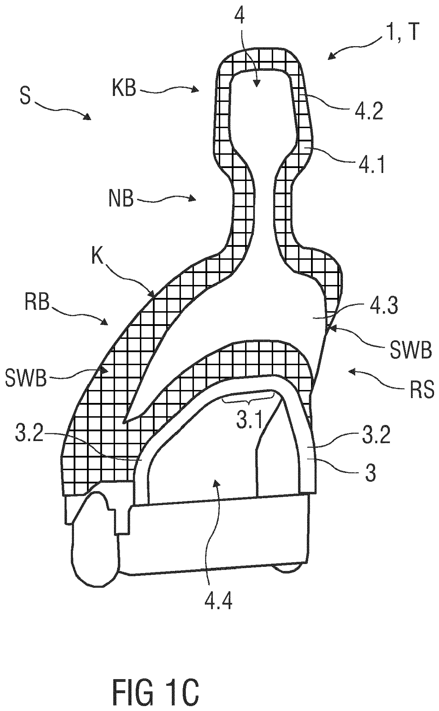

Figur 1C zeigt schematisch ein Ausführungsbeispiel eine Vorderseite VS einer Tragstruktur T für ein als Rückenlehne 1 ausgebildetes Sitzteil S eines Fahrzeugsitzes.

Das Verbundbauteil 4 und der Rohrrahmen 3 bilden ein Konturelement K für die Tragstruktur T. Dabei bildet das Konturelement K eine Sitzkontur für einen Sitzbenutzer. Hierzu sind sowohl das Verbundbauteil 4 als auch der Rohrrahmen 3 jeweils derart geformt und miteinander gefügt, dass diese im vorliegenden Beispiel für die Rückenlehne 1 eine Rückenkontur bilden. Dazu weist das Konturelement K beispielsweise einen mittleren Rückenbereich RB und zwei gegenüber dem Rückenbereich RB geneigte Seitenwangenbereiche SWB auf.

Im Ausführungsbeispiel ist eine Rückenlehne 1 mit integrierter Kopfauflage gezeigt. Das Konturelement K umfasst dazu einen mittleren Rückenbereich RB, der über einen Nackenbereich NB mit einem Kopfbereich KB verbunden ist, wobei im mittleren Rückenbereich RB zwei gegenüber dem Rückenbereich RB geneigte Seitenwangenbereiche SWB vorgesehen sind.

Das Verbundbauteil 4 ist insbesondere schalenförmig ausgebildet und weist vorder- und/oder rückseitig Vertiefungen 4.1 auf, welche mit einer Versteifungsstruktur 4.2, zum Beispiel in Rippen- und/oder Wabenstruktur, versehen sind.

Dabei weist das Verbundbauteil 4 im Randbereich der Schale kanalförmige Vertiefungen 4.1 auf, die mit rippenförmigen Versteifungsstrukturen 4.2 versehen sind. Die kanalförmigen Vertiefungen 4.1 sind beispielsweise als eine die Schale des Verbundbauteils 4 weitgehend vollständig umlaufende Randvertiefung ausgebildet. Im mittleren Rückenbereich RB der Schale kann das Verbundbauteil 4 flächenförmige, insbesondere großflächige, Vertiefungen 4.1 aufweisen, die mit einer rippen- oder wabenförmigen Versteifungsstruktur 4.2 versehen sind. Die Versteifungsstrukturen 4.2 sind derart in die vorder- und/oder rückseitig eingeformten Vertiefungen 4.1 eingebracht, dass diese Versteifungsstrukturen 4.2 bündig mit der Schale abschließen und somit eine Oberflächenebene oder -kontur des Sitzteils S und damit der Rückenlehne 1 bilden.

Zur sicheren Lastaufnahme bei Beanspruchung weist das Verbundbauteil 4 in einem unteren Schalenbereich 4.3 einen u-förmigen Ausschnitt 4.4 auf, in welcher der Rohrrahmen 3 korrespondierend geformt angeordnet ist. Insbesondere erstreckt sich der Rohrrahmen 3 in den Seitenwangenbereich SWB und ist entsprechend dreidimensional geformt, insbesondere gebogen. Beispielsweise umfasst der Rohrrahmen 3 einen mittleren geraden Rohrbereich 3.1, von dem zwei Schenkelrohrbereiche 3.2 weitgehend u-förmig abragen und entsprechend der Kontur der Seitenwangenbereiche SWB geformt sind, insbesondere dreidimensional, zum Beispiel bogenförmig, verlaufen.

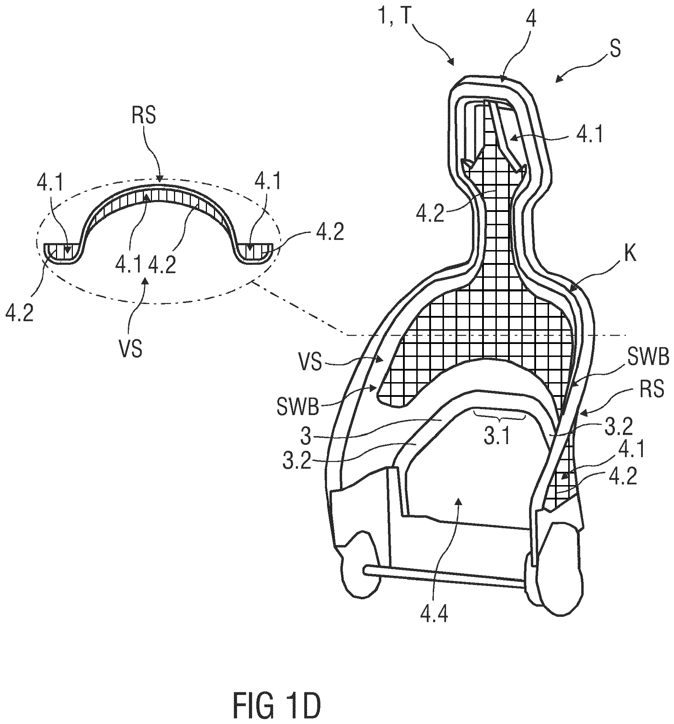

Figur 1D zeigt schematisch eine Rückseite RS der Tragstruktur T für die Rückenlehne 1 gemäß Figur 1C.

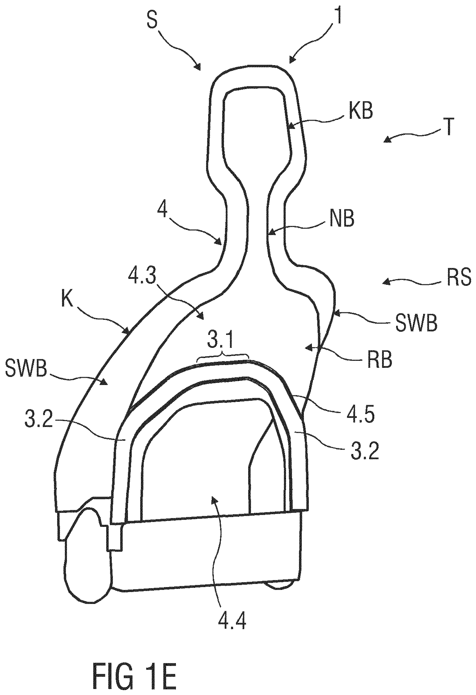

Figur 1E zeigt schematisch ein Ausführungsbeispiel für eine Rückseite RS einer alternativen Tragstruktur T für eine Rückenlehne 1, wobei anstelle der Anordnung des Rohrrahmens 3 im u-förmigen Ausschnitt 4.4 der Rohrrahmen 3 in einem u-förmigen Kanal 4.5 des Verbundbauteils 4 korrespondierend geformt angeordnet, insbesondere bündig angeordnet ist. In diesem Ausführungsbeispiel kann eine rückseitige Versteifungsstruktur 4.2 entfallen oder nur in Randbereichen ausgebildet sein (nicht näher dargestellt). Die Vorderseite VS kann analog oder ähnlich zur Vorderseite VS der Tragstruktur T nach Figur 1C ausgebildet sein.

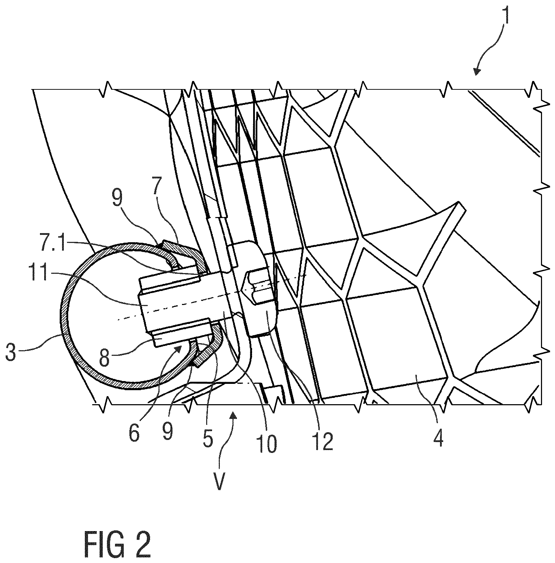

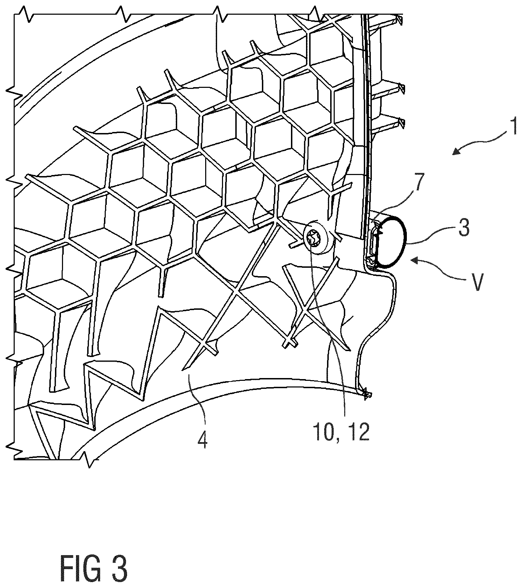

Die Figuren 2 und 3 zeigen Schnittdarstellungen der Rückenlehne 1.

Der Rohrrahmen 3 ist aus mindestens einem Rohr ausgebildet, d. h. er ist im Inneren hohl oder zumindest im Wesentlichen hohl, wie in den Figuren 2 und 3 gezeigt. Er weist im dargestellten Beispiel einen runden oder zumindest im Wesentlichen runden Querschnitt auf, wie ebenfalls in den Figuren 2 und 3 gezeigt, in welchen der Rohrrahmen 3 geschnitten dargestellt ist.

Der runde Querschnitt ist aus Gründen der Festigkeit und Steifigkeit besonders vorteilhaft. In anderen Ausführungsbeispielen kann jedoch auch eine andere Querschnittform vorgesehen sein, beispielsweise ein unrunder, ovaler, drei- oder vier- oder mehreckiger oder vieleckiger Querschnitt.

Das Verbundbauteil 4 wird beispielsweise in automatisierter Fertigung in einem so genannten One Shot Hybrid Molding Process als Organoblech mit Spritzgussmasse hergestellt. Dabei wird das Organoblech, beispielsweise mittels Infrarotlichtbestrahlung, erwärmt, so dass es umgeformt werden kann. Anschließend wird es in ein Spritzgusswerkzeug eingelegt und dabei auf vorgegebene Weise umgeformt. Im Spritzgusswerkzeug wird zudem die Spritzgussmasse angespritzt, insbesondere um Versteifungsstrukturen auszubilden, beispielsweise in Form von Rippenstrukturen und/oder Wabenstrukturen, wie in den Figuren 2 und 3 erkennbar. Die Spritzgussmasse ist insbesondere ein Kunststoff, insbesondere ein thermoplastischer Kunststoff.

Zur Ausbildung der Rückenlehne 1 wird das Verbundbauteil 4 mit dem Rohrrahmen 3 verbunden. Diese beiden Konstruktionselemente, d. h. das Verbundbauteil 4 und der Rohrrahmen 3, sind lasttragend und derart ausgebildet, insbesondere derart designed, dass sie den Körper eines Insassen mit gleichmäßiger Beabstandung einbetten. D. h. der Körper weist vorteilhafterweise an allen Stellen einen gleichen Abstand zum Verbundbauteil 4 bzw. Rohrrahmen 3 auf, wobei zwischen Insasse und Verbundbauteil 4 bzw. Rohrrahmen 3 bei dem fertiggestellten Fahrzeugsitz 2 insbesondere eine Polsterung angeordnet ist. Durch diese Ausformung des Rohrrahmens 3 und des Verbundbauteils 4 werden insbesondere Druckstellen am Körper des Insassen vermieden.

Durch die hohe Steifigkeit und Festigkeit des, insbesondere metallischen, Rohrrahmens 3 wird das Verbundbauteil 4 in dynamischen Lastfällen entlastet.

Eine Verbindungstechnik von Verbundbauteil 4 und Rohrrahmen 3 ist bei der hier beschriebenen Lösung derart gestaltet, dass Verbindungselemente bei einer Ansicht von hinten auf die aus Rohrrahmen 3 und Verbundbauteil 4 gebildete lasttragende Struktur nicht sichtbar sind. Hierzu wird das Rohr des Rohrrahmens 3 von vorn verprägt, d. h. es wird an einer Vorderseite des Rohrrahmens 3 eine Verprägung 5 in den Rohrrahmen 3 eingebracht, und der Rohrrahmen 3 wird gelocht, d. h. es werden im Bereich der Verprägung 5, insbesondere im Bereich einer Grundfläche der Verprägung 5, Öffnungen 6 in die Vorderseite des Rohrrahmens 3 eingebracht. Die Vorderseite ist einer Sitzfläche der Rückenlehne und somit einem Insassen, wenn dieser im Fahrzeugsitz 2 sitzt, zugewandt

Anschließend wird ein Adaptionselement 7, auch als Adaptionsblech bezeichnet, beispielsweise mit integrierten Gewindehülsen 8 derart von vorn auf dem Rohrrahmen 3 befestigt, dass die Gewindehülsen 8 jeweils in eine Öffnung 6 des Rohrrahmens 3 eintauchen. Hierzu wird das Adaptionselement 7 im Bereich der Verprägung 5 am Rohrrahmen 3 befestigt, insbesondere über der Grundfläche der Verprägung 5. Alternativ können die Gewindehülsen 8 Teil des Rohrrahmens 3 sein; in diesem Fall wird das Adaptionselement 7 derart auf die Öffnung 6 im Rohrrahmen 3 aufgesetzt, dass die Ausnehmung 7.1 und die Öffnung 6 übereinander liegen und eine Durchgangsöffnung für die Schraube bilden.

Die Befestigung des Adaptionselementes 7 mit dem Rohrrahmen 3 kann beispielsweise stoffschlüssig, formschlüssig und/oder kraftschlüssig erfolgen. Im hier dargestellten Beispiel erfolgt die Befestigung durch Verschweißen und somit stoffschlüssig, wie in Figur 2 anhand der Schweißnähte 9 ersichtlich. In anderen Ausführungsbeispielen kann das Adaptionselement 7 beispielsweise auch auf andere Weise am Rohrrahmen 3 befestigt sein.

Anschließend wird das Verbundbauteil 4 von vorn auf das Adaptionselement 7 gelegt und mit diesem und somit mit dem Rohrrahmen 3 von vorn nach hinten verschraubt. D. h. eine jeweilige Schraube 10 wird, ausgehend von einer Vorderseite des Verbundbauteils 4, mit einem Schraubenschaft 11 durch dieses hindurchgeführt und in die jeweilige im Rohrrahmen 3 angeordnete Gewindehülse 8 eingeschraubt, so dass sich ein jeweiliger Schraubenkopf 12 an der Vorderseite des Verbundbauteils 4 befindet. Da der Rohrrahmen 3 rückseitig geschlossen ist, sind somit die Verbindungselemente in Form der Gewindehülsen 8 und Schrauben 10 durch den Rohrrahmen 3 und das Verbundbauteil 4 verdeckt, so dass sie in der Rückansicht auf die Rückenlehne 1 nicht sichtbar sind, wodurch eine gute optische Anmutung erzielt wird.

Alternativ zur Verwendung des Adaptionselements 7 mit integrierten Gewindehülsen 8 können die Gewindehülsen 8 direkt in den Rohrrahmen 3 eingeschweißt werden. D. h. sie werden dann in der jeweiligen Öffnung 6 des Rohrrahmens 3 angeordnet und mit dem Rohrrahmen 3 verschweißt. Diese Ausführungsform ist jedoch insbesondere abhängig von einer Rohrwandstärke des Rohrrahmens 3 und von möglichen auf die Gewindehülsen 8 und somit auf den Rohrrahmen 3 und die Verschweißung zwischen Gewindehülsen 8 und Rohrrahmen 3 einwirkenden Belastungen.

Die auf die beschriebene Weise hergestellte Rückenlehne 1 umfasst somit den, insbesondere metallischen, Rohrrahmen 3 und das Verbundbauteil 4, wobei der Rohrrahmen 3 an seiner Vorderseite die Verprägung 5 und in der Grundfläche der Verprägung 5 die Öffnungen 6 aufweist, in welchen jeweils eine Gewindehülse 8 angeordnet ist. Die jeweilige Gewindehülse 8 ist dabei entweder direkt in den Rohrrahmen 3 eingeschweißt oder ein Bestandteil des, insbesondere metallischen, Adaptionselementes 7, welches an der Vorderseite des Rohrrahmens 3, insbesondere über der Verprägung 5, d. h. im Bereich der Verprägung 5 von dieser abgehoben, angeordnet ist und am Rohrrahmen 3, insbesondere durch Verschweißen, befestigt ist. Das Verbundbauteil 4 ist an der Vorderseite des Rohrrahmens 3 entweder direkt am Rohrrahmen 3 oder, zumindest im Bereich des Adaptionselementes 7, wenn dieses vorhanden ist, an der Vorderseite des Adaptionselementes 7 angeordnet und mittels der jeweiligen in die jeweilige Gewindehülse 8 eingeschraubten Schraube 10 am Rohrrahmen 3 befestigt.

### Bezugszeichenliste

- 1: Rückenlehne
- 2: Fahrzeugsitz
- 3: Rohrrahmen
- 3.1: Rohbereich
- 3.2: Schenkelrohrbereich
- 4: Verbundbauteil
- 4.1: Vertiefung
- 4.2: Versteifungsstruktur
- 4.3: Schalenbereich
- 4.4: u-förmiger Ausschnitt
- 4.5: u-förmiger Kanal
- 5: Verprägung
- 6: Öffnung
- 7: Adaptionselement
- 7.1: Ausnehmung
- 8: Gewindehülse
- 9: Schweißnaht
- 10: Schraube
- 11: Schraubenschaft
- 12: Schraubenkopf

- K: Konturelement
- KB: Kopfbereich
- NB: Nackenbereich
- RB: mittlerer Rückenbereich
- RS: Rückseite
- S: Sitzteil
- SWB: Seitenwangenbereich
- T: Tragstruktur
- V: Schraub-Hülse-Verbindung
- VS: Vorderseite

## Patentansprüche

1. Sitzteil (S), insbesondere Rückenlehne (1) für einen Fahrzeugsitz (2), umfassend
eine Tragstruktur (T), welche einen Rohrrahmen (3) und ein Verbundbauteil (4) umfasst, wobei
- der Rohrrahmen (3) an einer Vorderseite mindestens eine Öffnung (6) aufweist, in welcher eine Gewindehülse (8) angeordnet ist und
- das Verbundbauteil (4) an der Vorderseite des Rohrrahmens (3) angeordnet und mittels einer in die Gewindehülse (8) eingeschraubten Schraube (10) am Rohrrahmen (3) befestigt ist, wobei
- die Gewindehülse (8) ein Bestandteil eines Adaptionselements (7) ist, welches an der Vorderseite des Rohrrahmens (3) befestigt ist.

2. Sitzteil (S) nach Anspruch 1,
**dadurch gekennzeichnet, dass** zwischen dem Rohrrahmen (3) und dem Verbundbauteil (4) ein flexibles Adaptionselement (7) mit einer mit der Öffnung (6) übereinstimmend angeordneten Ausnehmung (7.1) für die Schraube (10) vorgesehen ist,
wobei die Schraube (10) das Adaptionselement (7) durchdringt und das Adaptionselement (7) im zusammengebauten Zustand von Rohrrahmen (3) und Verbundbauteil (4) zwischen diesen einstellbar verspannt ist.

3. Sitzteil (S) nach Anspruch 2,
**dadurch gekennzeichnet, dass** das Verbundbauteil (4) und der Rohrrahmen (3) ein Konturelement (K) bilden.

4. Sitzteil (S) nach Anspruch 3, wobei das Konturelement (K) eine Sitzkontur für einen Sitzbenutzer bildet und einen mittleren Bereich (M) und zwei gegenüber dem mittleren Bereich (M) geneigte Seitenwangenbereiche (SWB) aufweist.

5. Sitzteil (S) nach Anspruch 3, wobei das Konturelement (K) eine Sitzkontur für eine Rückenlehne (1) mit integrierter Kopfstütze bildet und einen mittleren Rückenbereich (RB), der über einen Nackenbereich (NB) mit einem Kopfbereich (KB) verbunden ist, und zwei gegenüber dem Rückenbereich (RB) geneigte Seitenwangenbereiche (SWB) aufweist.

6. Sitzteil (S) nach einem der vorhergehenden Ansprüche,
**dadurch gekennzeichnet, dass**
das Verbundbauteil (4) schalenförmig ausgebildet ist und vorder- und/oder rückseitig Vertiefungen (4.1) aufweist, welche mit einer Versteifungsstruktur (4.2) versehen sind.

7. Sitzteil (S) nach einem der vorhergehenden Ansprüche,
**dadurch gekennzeichnet, dass** das Verbundbauteil (4) in einem unteren Schalenbereich (4.3) einen u-förmigen Ausschnitt (4.4) oder einen u-förmigen Kanal (4.5) aufweist, in welchem der Rohrrahmen (3) korrespondierend geformt angeordnet ist.

8. Sitzteil (S) nach einem der vorhergehenden Ansprüche,
**dadurch gekennzeichnet, dass**
die Gewindehülse/n (8) in den Rohrrahmen (3) eingeschweißt ist/sind.

9. Sitzteil (S) nach einem der vorhergehenden Ansprüche,
**dadurch gekennzeichnet, dass** der Rohrrahmen (3) an seiner Vorderseite im Bereich der Öffnung/en (6) mindestens eine Verprägung (5) aufweist.

10. Sitzteil (S) nach Anspruch 9,
**dadurch gekennzeichnet, dass** das Adaptionselement (7) im Bereich der Verprägung (5) angeordnet ist, insbesondere auf einer Grundfläche der Verprägung (5) oder im Bereich der Grundfläche.

11. Sitzteil (S) nach einem der Ansprüche 2 bis 10,
**dadurch gekennzeichnet, dass** das Adaptionselement (7) und/oder der Rohrrahmen (3) aus Metall ausgebildet ist/sind.

12. Sitzteil (S) nach einem der Ansprüche 2 bis 11,
**dadurch gekennzeichnet, dass** das Adaptionselement (7) mit dem Rohrrahmen (3) verschweißt ist.

13. Sitzteil (S) nach einem der vorhergehenden Ansprüche,
**dadurch gekennzeichnet, dass** das Verbundbauteil (4) aus einem, insbesondere umgeformten, Organoblech gebildet ist.

14. Sitzteil (S) nach Anspruch 13,
**dadurch gekennzeichnet, dass** an das Organoblech eine Spritzgussmasse angespritzt ist.

## Claims

1. Seat part (S), in particular backrest (1), for a vehicle seat (2), comprising:
a support structure (T) which comprises a tubular frame (3) and a composite component (4), wherein
- the tubular frame (3) on a front side has at least one opening (6) in which is disposed a threaded bush (8); and
- the composite component (4) is disposed on the front side of the tubular frame (3) and is fastened to the tubular frame (3) by way of a screw (10) that is screwed into the threaded bush (8); wherein
- the threaded bush (8) is a component part of an adaption element (7) which is fastened to the front side of the tubular frame (3).

2. Seat part (S) according to Claim 1,
**characterized in that** a flexible adaption element (7), which for the screw (10) has a recess (7.1) corresponding to the opening (6), is provided between the tubular frame (3) and the composite component (4);
wherein the screw (10) penetrates the adaption element (7), and the adaption element (7) in the assembled state of the tubular frame (3) and the composite component (4) is braced so as to be adjustable between said tubular frame (3) and said composite component (4).

3. Seat part (S) according to Claim 2,
**characterized in that** the composite component (4) and the tubular frame (3) form a contoured element (K) .

4. Seat part (S) according to Claim 3, wherein the contoured element (K) forms a seat contour for a seat user, and has a central region (M) and two side bolster regions (SWB) that are inclined in relation to the central region (M).

5. Seat part (S) according to Claim 3, wherein the contoured element (K) forms a seat contour for a backrest (1), which has an integrated headrest, and a central back region (RB) which by way of a neck region (NB) is connected to a head region (KB) and has two side bolster regions (SWB) that are inclined in relation to the back region (RB).

6. Seat part (S) according to one of the preceding claims,
**characterized in that**
the composite component (4) is configured in the shape of a shell and on the front side and/or the rear side has depressions (4.1) which are provided with a reinforcement structure (4.2).

7. Seat part (S) according to one of the preceding claims,
**characterized in that** the composite component (4) in a lower shell region (4.3) has a U-shaped cutout (4.4) or a U-shaped channel (4.5) in which the correspondingly shaped tubular frame (3) is disposed.

8. Seat part (S) according to one of the preceding claims,
**characterized in that**
the threaded bush/bushes (8) is/are welded into the tubular frame (3).

9. Seat part (S) according to one of the preceding claims,
**characterized in that** the tubular frame (3) on the front side thereof, in the region of the opening/openings (6), has at least one embossing (5) .

10. Seat part (S) according to Claim 9,
**characterized in that** the adaption element (7) is disposed in the region of the embossing (5), in particular on a base area of the embossing (5) or in the region of the base area.

11. Seat part (S) according to one of Claims 2 to 10, **characterized in that** the adaption element (7) and/or the tubular frame (3) are/is configured from metal.

12. Seat part (S) according to one of Claims 2 to 11, **characterized in that** the adaption element (7) is welded to the tubular frame (3).

13. Seat part (S) according to one of the preceding claims,
**characterized in that** the composite component (4) is formed from an, in particular formed, organic sheet.

14. Seat part (S) according to Claim 13,
**characterized in that** the organic sheet is overmoulded with an injection-moulding compound.

## Revendications

1. Partie de siège (S), notamment dossier (1) pour un siège de véhicule (2), comprenant
une structure porteuse (T), qui comprend un cadre tubulaire (3) et un composant composite (4),
- le cadre tubulaire (3) présentant sur un côté avant au moins une ouverture (6), dans laquelle est agencée une douille filetée (8) et
- le composant composite (4) étant agencé sur le côté avant du cadre tubulaire (3) et fixé au cadre tubulaire (3) au moyen d'une vis (10) vissée dans la douille filetée (8),
- la douille filetée (8) étant un constituant d'un élément d'adaptation (7), qui est fixé sur le côté avant du cadre tubulaire (3).

2. Partie de siège (S) selon la revendication 1, **caractérisée en ce qu'**entre le cadre tubulaire (3) et le composant composite (4) est prévu un élément d'adaptation flexible (7) avec un évidement (7.1) pour la vis (10) agencé en correspondance avec l'ouverture (6),
la vis (10) traversant l'élément d'adaptation (7) et l'élément d'adaptation (7) étant serré de manière ajustable entre le cadre tubulaire (3) et le composant composite (4) à l'état assemblé de ceux-ci.

3. Partie de siège (S) selon la revendication 2, **caractérisée en ce que** le composant composite (4) et le cadre tubulaire (3) forment un élément de contour (K).

4. Partie de siège (S) selon la revendication 3, l'élément de contour (K) formant un contour de siège pour un utilisateur du siège et présentant une zone centrale (M) et deux zones de joues latérales (SWB) inclinées par rapport à la zone centrale (M).

5. Partie de siège (S) selon la revendication 3, l'élément de contour (K) formant un contour de siège pour un dossier (1) avec appui-tête intégré et présentant une zone de dos centrale (RB), qui est reliée à une zone de tête (KB) par l'intermédiaire d'une zone de nuque (NB), et deux zones de joues latérales (SWB) inclinées par rapport à la zone de dos (RB).

6. Partie de siège (S) selon l'une quelconque des revendications précédentes, **caractérisée en ce que** le composant composite (4) est configuré sous forme de coque et présente à l'avant et/ou à l'arrière des creux (4.1) qui sont munis d'une structure de renforcement (4.2).

7. Partie de siège (S) selon l'une quelconque des revendications précédentes, **caractérisée en ce que** le composant composite (4) présente dans une zone de coque inférieure (4.3) une découpe en forme de U (4.4) ou un canal en forme de U (4.5), dans laquelle ou dans lequel le cadre tubulaire (3) est agencé de manière à avoir une forme correspondante.

8. Partie de siège (S) selon l'une quelconque des revendications précédentes, **caractérisée en ce que** la ou les douilles filetées (8) sont soudées dans le cadre tubulaire (3).

9. Partie de siège (S) selon l'une quelconque des revendications précédentes, **caractérisée en ce que** le cadre tubulaire (3) présente sur son côté avant, dans la zone de la ou des ouvertures (6), au moins une empreinte (5) .

10. Partie de siège (S) selon la revendication 9, **caractérisée en ce que** l'élément d'adaptation (7) est agencé dans la zone de l'empreinte (5), notamment sur une surface de base de l'empreinte (5) ou dans la zone de la surface de base.

11. Partie de siège (S) selon l'une quelconque des revendications 2 à 10, **caractérisée en ce que** l'élément d'adaptation (7) et/ou le cadre tubulaire (3) est/sont réalisé(s) en métal.

12. Partie de siège (S) selon l'une quelconque des revendications 2 à 11, **caractérisée en ce que** l'élément d'adaptation (7) est soudé au cadre tubulaire (3).

13. Partie de siège (S) selon l'une quelconque des revendications précédentes, **caractérisée en ce que** le composant composite (4) est formé d'une tôle organique, notamment mise en forme.

14. Partie de siège (S) selon la revendication 13, **caractérisée en ce qu'**une masse de moulage par injection est injectée sur la tôle organique.
